# EUROPEAN PATENT APPLICATION

(11) **EP 4 633 225 A1**
(43) Date of publication of application: **15.10.2025**
(21) Application number: 23910299.9
(22) Date of filing: 20.12.2023
(51) Int. Cl.: H04W 24/06, H04L 41/14, H04L 41/16

(54) **METHOD FOR MONITORING OR TRAINING AI MODEL, AND COMMUNICATION APPARATUS**

(30) Priority: 30.12.2022 CN 202211735507
(71) Applicant: Huawei Technologies Co., Ltd., Shenzhen, Guangdong 518129 (CN)
(72) Inventor: CHEN, Jiaxuan, Shenzhen, Guangdong 518129 (CN); PANG, Jiyong, Shenzhen, Guangdong 518129 (CN); JIN, Huangping, Shenzhen, Guangdong 518129 (CN); SUN, Yan, Shenzhen, Guangdong 518129 (CN)
(74) Representative: Gill Jennings & Every LLP
(86) International application number: PCT/CN2023/140255
(87) International publication number: WO 2024/140370

(57) **Abstract**

This application provides an AI model monitoring or training method and a communication apparatus. When performance of one or more AI modules of a communication link needs to be monitored or trained, an input and/or output of a first module affecting an input and/or output of the one or more AI modules is obtained, and the one or more AI modules are monitored or trained based on the input and/or output of the first module. Because the impact of the related module of the communication link on the input and/or output of the one or more AI modules that are monitored or that need to be trained is considered, performance monitoring accuracy of the AI module or inference performance of the AI module can be improved.

## Description

This application claims priority to Chinese Patent Application No. 202211735507.2, filed with the China National Intellectual Property Administration on December 30, 2022 and entitled "AI MODEL MONITORING OR TRAINING METHOD AND COMMUNICATION APPARATUS", which is incorporated herein by reference in its entirety.

### TECHNICAL FIELD

Embodiments of this application relate to the field of artificial intelligence, and more specifically, to an AI model monitoring or training method and a communication apparatus.

### BACKGROUND

Currently, artificial intelligence (artificial intelligence, AI) has been widely applied to communication links to improve communication performance. When AI models are used to implement a plurality of modules in a communication link, performance of the communication link is comprehensively affected by a plurality of AI models.

An AI model performance monitoring or training method is urgently needed to improve AI model performance monitoring accuracy and improve AI model inference performance.

### SUMMARY

This application provides an AI model monitoring and/or training method and a communication apparatus to improve AI model performance monitoring accuracy or improve AI model inference performance.

According to a first aspect, an AI model monitoring and/or training method is provided. The method includes:
a first network element obtains an input and/or output of a first module, where the first module is an AI module or a non-AI module of a communication link; and
the first network element monitors and/or trains one or more first AI modules of the communication link based on the input and/or output of the first module, where
an input and/or output of the one or more first AI modules is determined based on the input and/or output of the first module, or the input and/or output of the first module is determined based on an input and/or output of the one or more first AI modules.

According to the technical solution provided in this application, when performance of one or more AI modules (namely, first AI modules) of the communication link is monitored, the input and/or output of the first module affecting an input and/or output of the one or more AI modules is obtained, and the one or more AI modules are monitored and/or trained based on the input and/or output of the first module. Because the impact of the related module of the communication link on the input and/or output of the one or more AI modules is considered, AI module performance monitoring accuracy can be improved or AI model inference performance can be improved.

With reference to the first aspect, in some implementations of the first aspect, that the input and/or output of the one or more first AI modules is determined based on the input and/or output of the first module, or the input and/or output of the first module is determined based on the input and/or output of the one or more first AI modules includes:
an identifier of the corresponding input and/or output of the one or more first AI modules corresponds to an identifier of the input and/or output of the first module; or
a value of a corresponding execution time of the one or more first AI modules corresponds to a value of an execution time of the first module.

Based on this implementation, if the input and/or output of the first module is used to monitor the one or more first AI modules, the input and/or output of the first module corresponds to or is associated with the input and/or output of each of the one or more first AI modules, or corresponds to a same communication process, to improve the performance monitoring accuracy of the one or more first AI modules or improve the AI model inference performance.

For a same communication process, refer to descriptions and examples in embodiments of the specification.

For example, an identifier of an input of a module of the communication link may be, for example, an identifier of a resource (for example, an identifier of a time-frequency resource) used when the input of the module is transmitted over an air interface; and an identifier of an output of the module may be, for example, an identifier of a resource used when the output of the module is transmitted over the air interface.

With reference to the first aspect, in some implementations of the first aspect, the first module is deployed on the first network element or the second network element, and the one or more first AI modules are deployed on the first network element; or
the first module is deployed on the first network element or the second network element, and the one or more first AI modules are deployed on the second network element; or
the first module is deployed on the first network element or the second network element, the one or more first AI modules include a first sub AI module and a second sub AI module, the first sub AI module is deployed on the first network element, the second sub AI module is deployed on the second network element, and the first sub AI module and the second sub AI module are used in a matching manner.

Based on this implementation, the AI module monitoring or training method provided in this application may be applicable to a plurality of scenarios, for example, a scenario in which the first network element monitors and/or trains an AI module deployed at a local end, or a scenario in which the first network element provides a monitoring parameter for the second network element to monitor and/or train performance of an AI module deployed on the second network element, or a scenario in which the first network element monitors and/or trains a dual-ended model. In this way, the AI model monitoring accuracy in these scenarios can be improved, and the AI model inference performance can be improved.

With reference to the first aspect, in some implementations of the first aspect, the first module is deployed on the second network element.

That a first network element obtains an input and/or output of a first module includes:
the first network element receives first information from the second network element, where the first information indicates the input and/or output of the first module.

Based on this implementation, if the first module is deployed on the second network element, the first network element obtains the input and/or output of the first module by using a report of the second network element, and monitors or trains, based on the input and/or output of the first module, the one or more AI modules on this side or deployed on the second network element, to improve the AI model monitoring accuracy or improve the AI model inference performance.

With reference to the first aspect, in some implementations of the first aspect, before the first network element receives the first information from the second network element, the method further includes:
the first network element sends first indication information to the second network element, where the first indication information indicates one or more monitoring parameters, and the one or more monitoring parameters include the input and/or output of the first module.

Based on this implementation, the first network element indicates, based on a monitoring or training requirement of the AI module, the second network element to report an input and/or output of a corresponding module of the communication link, to monitor performance of the AI module or train the AI model.

With reference to the first aspect, in some implementations of the first aspect, the method further includes:
the first network element obtains an input and/or output of a second module, where the second module is an AI module or a non-AI module of the communication link; and
the first network element sends second information to the second network element, where the second information indicates the input and/or output of the second module, the input and/or output of the second module is determined based on an input and/or output of a second AI module of the communication link, or an input and/or output of a second AI module of the communication link is determined based on the input and/or output of the second module.

Based on this implementation, the first network element obtains the one or more monitoring parameters (for example, including the input and/or output of the second module) and provides the one or more monitoring parameters for the second network element. The one or more monitoring parameters are used by the second network element to monitor or train the one or more AI modules of the second network element, to improve AI model monitoring or training accuracy.

With reference to the first aspect, in some implementations of the first aspect, before the first network element sends the second information to the second network element, the method further includes:
the first network element receives second indication information from the second network element, where the second indication information indicates one or more monitoring parameters, and the one or more monitoring parameters include the input and/or output of the second module.

Based on this implementation, the first network element provides a corresponding monitoring parameter for the second network element based on an indication of the second network element, so that the second network element monitors or trains the AI model, and an on-demand feedback can be performed based on a monitoring requirement or a training requirement of the second network element.

With reference to the first aspect, in some implementations of the first aspect, that the first indication information indicates one or more monitoring parameters includes:
the first indication information indicates a first index, the first index is one of indexes included in a predefined correspondence, the correspondence indicates a correspondence between a monitoring parameter and/or a combination of monitoring parameters and an index, and the combination of monitoring parameters includes two or more monitoring parameters; or
the first indication information indicates an identifier of the one or more monitoring parameters, and the identifier of the one or more monitoring parameters is one or more identifiers in identifiers of a group of predefined monitoring parameters.

In this implementation, the first indication information may indicate the monitoring parameter (for example, an input and/or output of a non-AI module or an AI module of the communication link) by using a plurality of implementations.

With reference to the first aspect, in some implementations of the first aspect, the first indication information further includes an identifier of the one or more first AI modules, and the one or more monitoring parameters indicated by the first indication information are used to monitor the one or more first AI modules.

Based on this implementation, the monitoring parameter indicated by the first indication information is associated with the identifier of the one or more first AI modules, and a to-be-fed-back monitoring parameter indicated by the first indication information is used to monitor or train the one or more first AI modules.

With reference to the first aspect, in some implementations of the first aspect, the method further includes:
the first network element sends third indication information to the second network element, where
the third indication information indicates one of the following information:
   one or more values of an execution time of a third module of the communication link; or
   one or more identifiers of an input of a third module of the communication link; or
   one or more identifiers of an output of the third module of the communication link.

Based on this implementation, when a monitoring parameter (for example, the input and/or output of the first module) that needs to be fed back is generated (or obtained or generated) without interaction between the first network element and the second network element, and when the first network element indicates the second network element to feed back the monitoring parameter, the first network element may indicate information about a time or an identifier corresponding to any other monitoring parameter that belongs to a same communication process as the monitoring parameter. Therefore, the second network element may determine the monitoring parameter in the corresponding communication process based on the information about the time or the identifier, so that the model monitoring accuracy can be improved or the AI model inference performance can be improved.

With reference to the first aspect, in some implementations of the first aspect, that the first indication information indicates the one or more monitoring parameters includes:
the first indication information indicates a plurality of monitoring parameters, and the plurality of monitoring parameters include a first monitoring parameter and a second monitoring parameter; and
the third indication information indicates a first value of the execution time of the third module of the communication link and a first value of an execution time of a fourth module of the communication link, where
the first value of the execution time of the third module is used to determine a first value of the first monitoring parameter, the first value of the execution time of the fourth module is used to determine a first value of the second monitoring parameter, and the first value of the first monitoring parameter corresponds to the first value of the second monitoring parameter; or
the third indication information indicates a first identifier of the input or a first identifier of the output of the third module of the communication link and a first identifier of an input or a first identifier of an output of the fourth module of the communication link, where
the first identifier of the input or the first identifier of the output of the third module is used to determine a first value of the first monitoring parameter, the first identifier of the input or the first identifier of the output of the fourth module is used to determine a first value of the second monitoring parameter, and the first value of the first monitoring parameter corresponds to the first value of the second monitoring parameter.

Based on this implementation, when there are a plurality of monitoring parameters that need to be fed back, and some monitoring parameters (for example, the first monitoring parameter) are generated without interaction between the first network element and the second network element, but some monitoring parameters (for example, the second monitoring parameter) need to be generated with interaction between the first network element and the second network element, and when the first network element indicates the second network element to feed back the plurality of monitoring parameters, the first network element may indicate an execution time of a module or an identifier of an input and/or output of the module before interaction, and in addition, further needs to indicate an execution time of a module or an identifier of an input and/or output of the module after interaction. Further, the second network element may determine the plurality of monitoring parameters that belong to a same communication process as the moment and the identifier of the input and/or output. In this way, the model monitoring accuracy can be improved, or the AI model inference performance can be improved.

With reference to the first aspect, in some implementations of the first aspect, that the first indication information indicates the one or more monitoring parameters includes:
the first indication information indicates a plurality of monitoring parameters, and the plurality of monitoring parameters include a first monitoring parameter and a second monitoring parameter; and
the third indication information indicates a first value of the execution time of the third module of the communication link and first time information, and the first value of the execution time of the third module and the first time information indicate a first value of an execution time of a fourth module of the communication link, where
the first value of the execution time of the third module is used to determine a first value of the first monitoring parameter, the first value of the execution time of the fourth module is used to determine a first value of the second monitoring parameter, and the first value of the first monitoring parameter corresponds to the first value of the second monitoring parameter.

Based on this implementation, when there are a plurality of monitoring parameters that need to be fed back, and some monitoring parameters (for example, the first monitoring parameter) are generated without interaction between the first network element and the second network element, but some monitoring parameters (for example, the second monitoring parameter) need to be generated with interaction between the first network element and the second network element, and when the first network element indicates the second network element to feed back the plurality of monitoring parameters, the first network element may indicate an execution time of a module before interaction or an execution time of a module after interaction and time information (that is, the first time information). Further, the second network element may determine, based on the time-related information, the plurality of monitoring parameters that belong to a same communication process as the time. In this way, the model monitoring accuracy can be improved, or the AI model inference performance can be improved.

With reference to the first aspect, in some implementations of the first aspect, the first time information indicates a delay, and the delay is a delay between the first value of the execution time of the fourth module and the first value of the execution time of the third module; or
the first time information indicates a time difference, and the time difference is a time difference between the first value of the execution time of the third module and the first value of the execution time of the fourth module.

Base on this implementation, the first indication information may specifically indicate an execution time of a module (for example, a module A) before interaction and delay information, so that the second network element can determine the execution time of the module (the module A) before interaction and an execution time of a module (for example, the module B) after interaction; or the first indication information may specifically indicate an execution time of a module (for example, the module B) after interaction and time difference information, so that the second network element can determine an execution time of a module (for example, the module A) before interaction and the execution time of the module (the module B) after interaction. In this way, the second network element determines a plurality of monitoring parameters belonging to a same communication process, to improve AI model performance monitoring or model training accuracy.

With reference to the first aspect, in some implementations of the first aspect, the first time information indicates a moment T, and T is a real number; or
the first time information indicates a time interval [T1, T2], and T1 and T2 are both real numbers.

Based on this implementation, the first time information may be a moment or a time interval. When the first time information indicates a time interval, if a plurality of communication processes are involved in the time interval, the second network element needs to classify a plurality of monitoring parameters generated in each communication process into one group, and further feeds back a plurality of groups of monitoring parameters generated in a plurality of communication processes to the first network element for model performance monitoring or model training. A plurality of groups of monitoring data may be obtained by using one indication, so that feedback overheads of monitoring data can be reduced.

With reference to the first aspect, in some implementations of the first aspect, when the first time information indicates the time interval [T1, T2], the second monitoring parameter has a plurality of first values, and the first value of the first monitoring parameter corresponds to the plurality of first values of the second monitoring parameter.

Based on this implementation, when a monitoring parameter corresponds to one time interval, a plurality of monitoring parameters may be generated in the time interval, and the plurality of monitoring parameters and another associated monitoring parameter all belong to one communication process.

According to a second aspect, this application provides a communication apparatus. In a design, the communication apparatus may include modules that are in one-to-one correspondence with and that are configured to perform the method/operations/steps/actions described in the first aspect. The module may be a hardware circuit, may be software, or may be implemented by a hardware circuit in combination with software. In a design, the communication apparatus may include a processing module and a communication module. In an example, the communication apparatus is a network device, for example, an access network device. In another example, the communication apparatus is a terminal device.

According to a third aspect, this application provides a communication apparatus. The communication apparatus includes a processor, configured to implement the method according to any one of the first aspect or the implementations of the first aspect. The processor is coupled to a memory. The memory is configured to store instructions and data. When the processor executes the instructions stored in the memory, the method according to any one of the first aspect or the implementations of the first aspect can be implemented. Optionally, the communication apparatus may further include the memory. Optionally, the communication apparatus may further include a communication interface. The communication interface is used by the apparatus to communicate with another device. For example, the communication interface may be a transceiver, a hardware circuit, a bus, a module, a pin, or another type of communication interface. In an example, the communication apparatus may be a network device, for example, an access network device, or may be an apparatus, a module, a chip, or the like disposed in the network device, or an apparatus that can be used with the network device in a matching manner. In another example, the communication apparatus may be a terminal device, may be an apparatus, a module, a chip, or the like disposed in the terminal device, or may be an apparatus that can be used with the terminal device in a matching manner.

According to a fourth aspect, this application provides a communication system, including a first network element, and optionally, further including a second network element.

For example, the communication system includes a terminal device and an access network device. For example, the first network element is an access network device, and the second network element is a terminal device; or the first network element is a terminal device, and the second network element is an access network device. Alternatively, both the second network element and the second network element are network devices, or both the second network element and the second network element are terminal devices.

According to a fifth aspect, this application provides a communication system, including the communication apparatus according to the third aspect.

According to a sixth aspect, this application further provides a computer program. When the computer program is run on a computer, the computer is enabled to perform the method according to any one of the first aspect or the implementations of the first aspect.

According to a seventh aspect, this application further provides a computer program product, including instructions. When the instructions are run on a computer, the computer is enabled to perform the method according to any one of the first aspect or the implementations of the first aspect.

According to an eighth aspect, this application further provides a computer-readable storage medium. The computer-readable storage medium stores a computer program or instructions. When the computer program or instructions are run on a computer, the computer is enabled to perform the method according to any one of the first aspect or the implementations of the first aspect.

According to a ninth aspect, this application further provides a chip. The chip is configured to read a computer program stored in a memory to perform the method according to any one of the first aspect or the implementations of the first aspect, or the chip includes a circuit configured to perform the method according to any one of the first aspect or the implementations of the first aspect.

According to a tenth aspect, this application further provides a chip system. The chip system includes a processor, configured to support an apparatus in implementing the method according to any one of the first aspect or the implementations of the first aspect. In a possible design, the chip system further includes a memory, and the memory is configured to store a program and data that are necessary for the apparatus. The chip system may include a chip, or may include a chip and another discrete component.

For technical effects of the solutions provided in any one of the second aspect to the tenth aspect or the implementations of the second aspect to the tenth aspect, refer to corresponding descriptions in the first aspect. Details are not described again.

### BRIEF DESCRIPTION OF DRAWINGS

FIG. 1 is a diagram of an architecture of a communication system applicable to an embodiment of this application;
FIG. 2 is a diagram of an architecture of another communication system applicable to an embodiment of this application;
FIG. 3 is a diagram of a possible manner of applying AI to a communication link;
FIG. 4 is a diagram of another possible manner of applying AI to a communication link;
FIG. 5 is a diagram of an explainable AI model;
FIG. 6 is a schematic flowchart of an AI model monitoring or training method according to this application;
FIG. 7 is a diagram of a communication link;
FIG. 8 shows an example of monitoring or training an AI module according to this application;
FIG. 9 is a diagram of analyzing performance of an AI module by a first network element;
FIG. 10 is another diagram of analyzing performance of an AI module by a first network element;
FIG. 11 shows another example of monitoring or training an AI module according to this application;
FIG. 12 shows another example of monitoring or training an AI module according to this application;
FIG. 13 is a diagram of a communication apparatus 1000 according to this application; and
FIG. 14 is a diagram of another communication apparatus 1100 according to this application.

### DESCRIPTION OF EMBODIMENTS

The following describes technical solutions in this application with reference to the accompanying drawings.

The technical solutions provided in this application may be applied to various communication systems, for example, a long term evolution (long term evolution, LTE) system, a 5^{th} generation (5^{th} generation, 5G) communication system, a worldwide interoperability for microwave access (worldwide interoperability for microwave access, WiMAX) system or a wireless local area network (wireless local area network, WLAN) system, a satellite communication system, a future communication system, for example, a 6G communication system, or a system integrating a plurality of systems. The 5G communication system may also be referred to as a new radio (new radio, NR) system.

For example, the communication system may include a terminal device and a network device.

In embodiments of this application, the terminal device may be an entity, for example, a mobile phone, that is configured to receive or transmit a signal. The terminal device includes a handheld device having a wireless connection function, another processing device connected to a wireless modem, a vehicle-mounted device, or the like. The terminal device may be a portable, pocket-sized, handheld, computer built-in, or vehicle-mounted mobile apparatus. The terminal device may be widely used in various scenarios, for example, cellular communication, a wireless fidelity (wireless fidelity, Wi-Fi) system, device to device (device to device, D2D), vehicle to everything (vehicle to everything, V2X), peer to peer (peer to peer, P2P), machine to machine (machine to machine, M2M), machine type communication (machine type communication, MTC), internet of things (internet of things, IoT), virtual reality (virtual reality, VR), augmented reality (augmented reality, AR), industrial control, and automatic driving, telemedicine, a smart grid, smart furniture, a smart office, smart wearables, smart transportation, a smart city, an uncrewed aerial vehicle, a robot, remote sensing, passive sensing, positioning, navigation and tracking, and self-delivery and mobility. Some examples of a terminal device 120 are user equipment (user equipment, UE) in a 3GPP standard, a station (station, STA) in a Wi-Fi system, a fixed device, a mobile device, a handheld device, a wearable device, a cellular phone, a smartphone, a session initiation protocol (session initialization protocol, SIP) phone, a notebook computer, a personal computer, a smart book, a vehicle, a satellite, a global positioning system (global positioning system, GPS) device, a target tracking device, an uncrewed aerial vehicle, a helicopter, a flight vehicle, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device such as a smartwatch, a virtual reality (virtual reality, VR) device, an augmented reality (augmented reality, AR) device, a wireless terminal in industrial control (industrial control), a terminal in an internet of vehicles system, a wireless terminal in self driving (self driving), a wireless terminal in a smart grid (smart grid), a wireless terminal in transportation safety (transportation safety), a wireless terminal such as a smart fueler in a smart city (smart city), a terminal device on a high-speed railway, and a wireless terminal in a smart home (smart home), for example, a smart speaker, a smart coffee machine, and a smart printer. The terminal device may be a wireless device in the foregoing various scenarios or an apparatus disposed in the wireless device, for example, a communication module, a modem, or a chip in the foregoing device. The terminal device may also be referred to as a terminal, UE, a mobile station (mobile station, MS), a mobile terminal (mobile terminal, MT), or the like. The terminal device may alternatively be a terminal device in a future wireless communication system. In addition, the terminal device may further include a location reference device, for example, an automated guided vehicle (automated guided vehicle, AGV) or a device having a similar function. For ease of description, an example in which the terminal device is UE is used below for description.

In this application, a communication apparatus configured to implement a function of a terminal device may be a terminal device, may be a terminal device having some functions of the foregoing communication device, or may be an apparatus, for example, a chip system, that can support implementation of the function of the foregoing terminal device. The apparatus may be installed in the terminal device or used with the terminal device in a matching manner. In this application, the chip system may include a chip, or may include a chip and another discrete component.

The network device may be a device that provides a wireless communication function service, may communicate with the terminal device, and is usually located on a network side. The network device may be referred to as an access network device or a radio access network device. For example, the network device may be a base station. For example, the access network device in embodiments of this application includes but is not limited to a next generation base station (gNodeB, gNB) in a 5G communication system, a base station in a 6^{th} generation (6^{th} generation, 6G) mobile communication system, a base station in a future mobile communication system, an access point (access point, AP) in a Wi-Fi system, an evolved NodeB (evolved NodeB, eNB) in an LTE system, a radio network controller (radio network controller, RNC), a NodeB (NodeB, NB), a base station controller (base station controller, BSC), a home base station (for example, a home evolved NodeB or a home NodeB, HNB), a baseband unit (baseband unit, BBU), a transmission reception point (transmission reception point, TRP), a transmitting point (transmitting point, TP), a base transceiver station (base transceiver station, BTS), a satellite, an unmanned aerial vehicle, and the like. In a network structure, the network device may include a central unit (central unit, CU) node, or may include a distributed unit (distributed unit, DU) node, or may be a RAN device including a CU node and a DU node, or may be a RAN device including a control plane CU node, a user plane CU node, and a DU node; or the network device may be a radio controller, a relay station, a vehicle-mounted device, a wearable device, or the like in a cloud radio access network (cloud radio access network, CRAN) scenario. In addition, the base station may be a macro base station, a micro base station, a relay node, a donor node, or a combination thereof. The base station may alternatively be a communication module, a modem, or a chip that is disposed in the foregoing device or apparatus. The base station may alternatively be a mobile switching center, a device that bears a base station function in device to device (device to device, D2D), vehicle to everything (vehicle-to-everything, V2X), or machine to machine (machine to machine, M2M) communication, a network side device in a 6G network, a device that bears a base station function in a future communication system, or the like. The base station may support networks of a same access technology or different access technologies. This is not limited. The base station may be stationary or mobile. For example, a helicopter or an uncrewed aerial vehicle may be configured as a mobile base station, and one or more cells may move based on a location of the mobile base station. In another example, a helicopter or an uncrewed aerial vehicle may be configured as a device for communicating with another base station.

In this application, an apparatus configured to implement a function of the foregoing network device may be an access network device, may be a network device having some functions of an access network, or may be an apparatus that can support implementation of a function of an access network, for example, a chip system, a hardware circuit, a software module, or a combination of a hardware circuit and a software module. The apparatus may be installed in the access network device or used with the access network device in a matching manner. In the method in this application, an example in which the communication apparatus configured to implement the function of the access network device is an access network device is used for description.

Optionally, the communication system further includes at least one AI node.

Optionally, the AI node may be deployed at one or more of the following locations in the communication system: an access network device, a terminal device, a core network device, or the like. Alternatively, the AI node may be independently deployed, for example, deployed at a location other than any one of the foregoing devices, for example, a host or a cloud server in an over the top (OTT, over the top) system. The AI node may communicate with another device in the communication system. The another device may be, for example, one or more of the following: a network device, a terminal device, a network element of a core network, and the like.

Optionally, the AI node is configured to perform an AI-related operation. For example, the AI-related operation may include, for example, one or more of the following: a model failure test, a model performance test, model training, model inference, data collection, and the like.

For example, the network device may forward, to the AI node, data that is reported by the terminal device and that is related to an AI model, and the AI node performs the AI-related operation. For another example, the network device or the terminal device may forward, to the AI node, data related to an AI model, and the AI node performs the AI-related operation. For another example, the AI node may send, to the network device and/or the terminal device, an output of the AI-related operation, for example, one or more of the following: a trained neural network model, a model evaluation result, a model test result, and the like. For example, the AI node may directly send an output of the AI-related operation to the network device and the terminal device. For another example, the AI node may send an output of the AI-related operation to the terminal device by using the network device. For another example, the AI node may send an output of the AI-related operation to the network device by using the terminal device. It may be understood that when the AI node is disposed inside the network device or the terminal device, the sending herein may be understood as sending between modules inside the network device or the terminal device.

It may be understood that a quantity of AI nodes is not limited in this application. For example, when there are a plurality of AI nodes, the plurality of AI nodes may be divided based on functions. For example, different AI nodes are responsible for different functions.

It may be further understood that the AI nodes may be independent devices, may be integrated into a same device to implement different functions, or may be network elements in a hardware device, or may be software functions running on dedicated hardware, or may be virtualization functions instantiated on a platform (for example, a cloud platform). Specific forms of the AI nodes are not limited in this application.

In addition, all or some of the network devices or the terminal devices in this application may be dedicated hardware, software functions running on dedicated hardware, software functions running on general-purpose hardware, or instantiated virtualization functions on a platform (for example, a cloud platform). Specific forms of the network devices or the terminal devices are not limited in this application.

For ease of understanding, the following briefly describes related technologies or concepts in this application.

AI model: The AI model is an algorithm or a computer program that can implement an AI function. The AI model represents a mapping relationship between an input and an output of the model, or the AI model is a function model that maps an input of a dimension to an output of a dimension. A model parameter of the AI model is obtained through machine learning and training. For example, f(x) = ax2 + b is a quadratic function model, and may be considered as an AI model, where a and b are parameters of the AI model, and may be obtained through machine learning and training. For example, the AI model mentioned in the following embodiments of this application is not limited to a neural network, a linear regression model, a decision tree model, a support vector machine (support vector machine, SVM), a Bayesian network, a Q-learning model, or another machine learning (machine learning, ML) model.

Training dataset: The training dataset is data used for model training, verification, and testing in machine learning. An amount and quality of the data affect a machine learning effect. Training data may include an input of an AI model, or include an input of the AI model and a target output. The target output is a target value of an output of the AI model, and may also be referred to as an output truth value, an output ground truth value, a label, or a label sample.

Model training: The model training is a process of training a model parameter by selecting a proper loss function and by using an optimization algorithm, so that a value of the loss function is less than a threshold or a value of the loss function meets a target requirement.

AI model design: The AI model design mainly includes a data collection phase (for example, collection of training data and/or inference data), a model training phase, and a model inference phase, and may further include an inference result application phase. In the foregoing data collection phase, a data source (data source) is used to provide a training dataset and inference data. In the model training phase, the training data (training data) provided by the data source is analyzed or trained to obtain an AI model. The AI model represents a mapping relationship between an input and an output of the model. Obtaining the AI model through learning by using a model training node is equivalent to obtaining the mapping relationship between the input and the output of the model through learning by using the training data. In the model inference phase, the trained AI model in the model training phase is used to perform inference based on the inference data provided by the data source, to obtain an inference result. This phase may also be understood as follows: The inference data is input into the AI model to obtain an output by using the AI model. The output is the inference result. The inference result may indicate a configuration parameter used (executed) by an actor object, and/or an operation performed by the actor object. The inference result is released in the inference result application phase. For example, the inference result may be planned by an actor (actor) entity together. For example, the actor entity may send the inference result to one or more actor objects (for example, a core network device, an access network device, or a terminal device) for execution. For another example, the actor entity may further feed back performance of the model to the data source to facilitate subsequent model update training.

Loss function: The loss function is used to measure a difference between a predicted value and a true value of a model.

Model application: The model application is to use a trained model to resolve a practical problem.

It may be understood that the AI model may be implemented by using a hardware circuit, or may be implemented by using software, or may be implemented by combining software and hardware. This is not limited. Anon-limitative example of the software includes program code, a program, a subprogram, instructions, an instruction set, code, a code segment, a software module, an application, a software application, or the like.

In embodiments of this application, "indication" may include a direct indication, an indirect indication, an explicit indication, and an implicit indication. When a piece of indication information is described as indicating A, it may be understood that the indication information carries A, directly indicates A, or indirectly indicates A. The indirect indication may mean that the indication information directly indicates B and a correspondence between B and A, to indicate A by using the indication information. The correspondence between B and A may be predefined in a protocol, pre-stored, or obtained by using a configuration between network elements.

A wireless communication system applicable to this application may include one or more network side devices and one or more terminal devices. The network side device may include the foregoing access network device, and optionally, may further include a core network device. This is not limited. A device may also be replaced with a network element, an entity, a network entity, a communication device, a communication module, a node, a communication node, or the like. In this application, a device or a network element is used as an example for description.

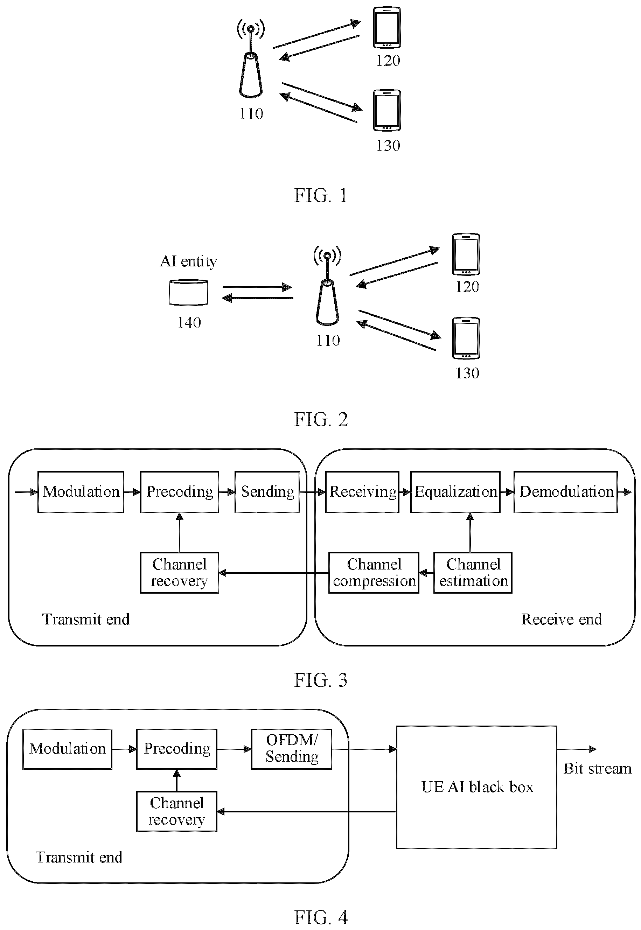

FIG. 1 is a diagram of an architecture of a communication system applicable to an embodiment of this application. For example, the communication system includes a network device 110, a terminal device 120, and a terminal device 130. The terminal devices 120 and 130 may access the network device 110, and communicate with the network device 110. Optionally, the network device 110 may be an access network device. For example, the communication system may further include an AI entity. The AI entity is located inside the network device 110, in other words, is a module of the network device 110, and is not shown in FIG. 1.

FIG. 2 is a diagram of an architecture of another communication system applicable to an embodiment of this application. The communication system includes a network device 110, a terminal device 120, a terminal device 130, and an AI entity 140. The network device 110 may forward, to the AI entity 140, data that is reported by a terminal device and that is related to the AI model. The AI entity 140 performs AI-related operations such as training dataset construction and model training, and provides one or more of outputs of the AI-related operations such as a trained AI model, model evaluation, and a test result for the network device 110.

It should be understood that FIG. 1 and FIG. 2 are merely diagrams. The communication system may further include other devices, for example, a core network device, a wireless relay device, a wireless backhaul device, and/or a device configured to implement an artificial intelligence function, which are not all shown in FIG. 1 and FIG. 2. In addition, during actual application, the wireless communication system may include a plurality of network devices (for example, an access network device and a core network device), or may include a plurality of terminal devices. This is not limited. One access network device may simultaneously serve one or more terminal devices. One terminal device may also simultaneously access one or more access network devices. A quantity of terminal devices and a quantity of network devices included in the wireless communication system are not limited in embodiments of this application. Quantities of devices shown in FIG. 1 and FIG. 2 are merely examples. Each device is not limited to one or more, and is not limited, depending on a specific technical solution.

A possible manner of applying AI to a communication link to improve communication performance includes: Some or all modules in the communication link are replaced with an AI model, and physical meanings of different modules in the communication link are retained, as shown in FIG. 3. Alternatively, some or all of the modules in the communication link are replaced with an AI model, and physical meanings of different modules in the communication link are not required to be retained, as shown in FIG. 4.

As shown in FIG. 3, a transmit end and a receive end include a plurality of modules, and each module retains a same physical meaning as that in a conventional communication link, for example, channel compression, channel recovery, and precoding. A difference between FIG. 3 and a conventional communication link lies in that some or all modules in FIG. 3 are implemented by using an AI model. For example, a channel compression module is an AI model-based channel compression module, and a precoding calculation module is an AI model-based precoding module. To ensure performance of a communication link, AI model performance in different modules may be monitored, and an operation such as model switching or update may be performed in time.

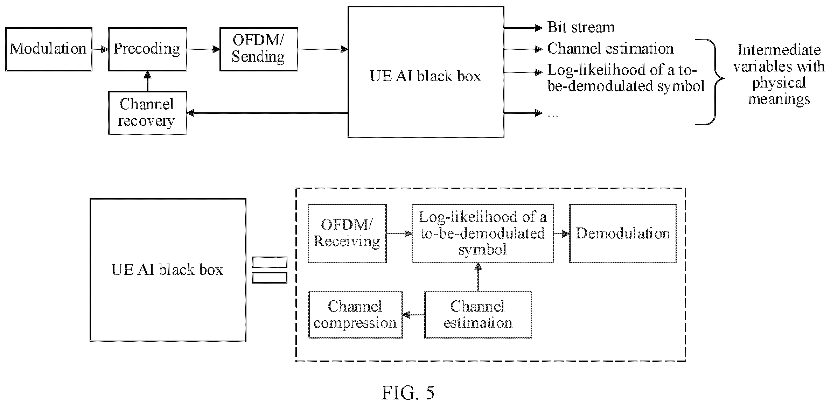

The receive end in FIG. 4 is implemented by an AI model, and a specific implementation process is not divided into a plurality of modules shown in FIG. 3. However, black box AI cannot explain a reason why the black box AI obtains an output. Therefore, reliability cannot be verified. Therefore, to ensure the reliability of the AI model, an explainable AI model may be used. The explainable AI model requires that the AI model can output a group of intermediate variables with physical meanings. The output of the AI model can be obtained by applying the group of intermediate variables to each module of a conventional communication link. Therefore, the group of intermediate variables can explain the reason why the black box AI obtains the output, as shown in FIG. 5. FIG. 5 is a diagram of an explainable AI model. The AI model in FIG. 4 is equivalent to a plurality of virtual modules in a dashed box in FIG. 5.

The intermediate variables output by the explainable AI model can also be used to monitor performance of the AI model.

When the AI model in the communication link is used to implement a plurality of modules (including the virtual module in FIG. 5) in the communication link, performance of the communication link is comprehensively affected by a plurality of AI models, and performance of each AI model is affected by performance of other modules. This poses a challenge to AI model performance monitoring or training. AI model performance monitoring is used as an example. In a known model monitoring solution, each AI model in a communication link is independently monitored. For example, a direct performance indicator or an indirect performance indicator is defined for the AI model, and model performance is monitored based on a value of the defined performance indicator. The direct performance indicator is an indicator that can be obtained through calculation based on a model input or output or a data label and that indicates model accuracy. The indirect performance indicator includes an indicator that indicates communication performance when the AI model is used in a communication link. However, for an AI model whose data label is difficult to obtain, it is difficult to calculate the direct performance indicator. However, for the indirect performance indicator, because performance of a communication link is affected by a plurality of AI models, it is difficult to directly use the indirect performance indicator to determine model performance. Practice shows that a solution of independently monitoring or training each AI model is not conducive to accurate determining of performance of a communication link, and affects performance improvement of the communication link.

The following describes the technical solutions provided in this application.

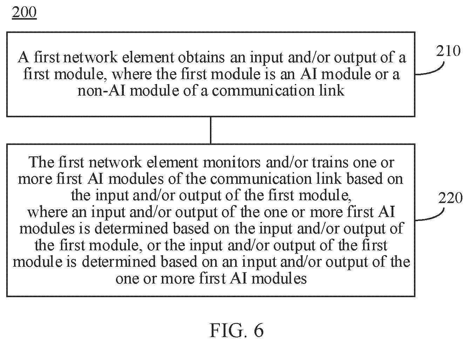

FIG. 6 is a schematic flowchart of an AI model monitoring or training method according to this application.

210: A first network element obtains an input and/or output of a first module, where the first module is an AI module or a non-AI module of a communication link.

In this application, the communication link may be a link between a transmit end and a receive end of a signal and/or data.

Optionally, the first network element may be one of the transmit end and the receive end of the communication link. Alternatively, the first network element may be an AI entity corresponding to the transmit end or the receive end. For example, the AI entity corresponding to the transmit end may be separately deployed from the transmit end, or may be a module inside the transmit end. Similarly, the AI entity corresponding to the receive end may be separately deployed from the receive end, or may be a module inside the receive end. This is not limited.

Optionally, the first module is not limited to one or more. In this embodiment of this application, one first module is used as an example for description. A person skilled in the art may understand an embodiment of a plurality of first modules with reference to the description of one first module. One first module is used as an example, and the first module may be any module of a communication link. In addition, the first module may be an AI module or a non-AI module.

220: The first network element monitors and/or trains one or more first AI modules of the communication link based on the input and/or output of the first module.

An input and/or output of the one or more first AI modules is determined based on the input and/or output of the first module, or the input and/or output of the first module is determined based on an input and/or output of the one or more first AI modules.

Optionally, that the input and/or output of each of the one or more first AI modules is determined based on the input and/or output of the first module, or the input and/or output of the first module is determined based on the input and/or output of the one or more first AI modules includes:
an identifier of the corresponding input and/or output of the one or more first AI modules corresponds to an identifier of the input and/or output of the first module; or
a value of a corresponding execution time of the one or more first AI modules corresponds to a value of an execution time of the first module.

It should be understood that the foregoing "plurality of first AI modules" are a plurality of AI modules of the communication link, and each of the plurality of AI modules is referred to as a first AI module.

In addition, that the identifier of the input and/or output of the one or more first AI modules corresponds to the identifier of the input and/or output of the first module, or the value of the corresponding execution time of the one or more first AI modules corresponds to the value of the execution time of the first module may mean that the input and/or output of the one or more first AI modules and the input and/or output of the first module belong to a same communication process. For example, based on a connection relationship between modules included in a communication link, inputs and/or outputs of modules generated in a process of sequentially running these modules correspond to each other based on a communication process. For example, if the output of the first module at a moment t1 is an input of an AI module a at a moment t2, the output of the first module at the moment t1 corresponds to the input of the AI module a at the moment t2, or the output of the first module at the moment t1 and the input of the AI module a at the moment t2 belong to a same communication process. For another example, according to the connection relationship between the inputs/or outputs of the modules of the communication link, an input y and/or output z of the AI module a is affected by an output x of the first module. The AI module a is an example of an AI module on the communication link. The first module is an example of any module (an AI module or a non-AI module) on the communication link, and the AI module a and the first module may be adjacent or not adjacent in terms of the connection relationship. In this case, the input y and/or output z of the AI module a corresponds to the output x of the first module, or belong to a same communication process, where x is an identifier of an output of the first module, y is an identifier of an input of the AI module a, and z is an identifier of an output of the AI module a. Identifiers of inputs and/or outputs of these modules may also be represented in other manners. This is not limited. In addition, optionally, the first module is used as an example. The identifier of the input of the first module may include a resource identifier used to transmit the input of the first module over an air interface. The resource identifier includes one or more of the following: a time domain resource position identifier, a frequency domain resource position identifier, a time-frequency resource position identifier, and a space domain resource position identifier, such as an antenna port or a beam identifier. The identifier of the output of the first module may include a resource identifier used to transmit the output of the first module over an air interface. The resource identifier includes one or more of the following: a time domain resource position identifier, a frequency domain resource position identifier, a time-frequency resource position identifier, and a space domain resource position identifier, such as an antenna port or a beam identifier. For example, time-frequency resource positions used to transmit different inputs (or outputs) of the first module over an air interface are generally different, and therefore may be used to identify different inputs (or outputs) of the first module.

Optionally, that the identifier of the input and/or output of the one or more first AI modules corresponds to the identifier of the input and/or output of the first module, or the value of the corresponding execution time of the one or more first AI modules corresponds to the value of the execution time of the first module may mean that the input and/or output of the one or more first AI modules and the input and/or output of the first module belong to a same inference process.

For example, an example in which UE performs CSI prediction is used. The UE feeds back information (for example, a channel estimation result) used for CSI prediction and historically predicted CSI to a base station. The information used for CSI prediction is an output of a channel estimation module on a UE side, and the historically predicted CSI is an output of a CSI prediction module on the UE side. The base station receives the information fed back by the UE, and uses the information as an input of a precoding module to obtain an output of the precoding module. There may be a plurality of pieces of information fed back by the UE for CSI prediction, and there may also be a plurality of pieces of historically predicted CSI. The plurality of pieces of information used for CSI prediction and the plurality of pieces of historically predicted CSI may belong to a plurality of different communication processes, but are all used as inputs of the precoding module. Therefore, a plurality of outputs of the channel estimation module and a plurality of outputs of the CSI prediction module on the UE side, and the output of the precoding module on the base station side belong to a same inference process.

It can be learned from the descriptions of the first module and the first AI module that in this embodiment of this application, the one or more first AI modules of the communication link are monitored and/or trained based on the input and/or output of the one or more first modules.

According to the technical solution provided in this application, when performance of one or more AI modules (namely, first AI modules) of the communication link is monitored, the input and/or output of the first module affecting an input and/or output of the one or more AI modules is obtained, and the one or more AI modules are monitored and/or trained based on the input and/or output of the first module. Because the impact of the related module of the communication link on the input and/or output of the one or more AI modules is considered, AI module performance monitoring or model training accuracy can be improved.

In this application, a monitoring parameter may be used for AI model performance monitoring and/or used for AI model training. This is not limited. In some embodiments below, only model monitoring is used as an example for description. It should be understood that in embodiments of monitoring an AI model based on a monitoring parameter, the AI model may alternatively be trained based on the monitoring parameter. During model monitoring or model training, impact of a related module of a communication link on an input and/or output of a to-be-monitored or to-be-trained AI module is considered. Therefore, the AI module performance monitoring or model training accuracy can be improved.

Optionally, an example in which one of the transmit end and the receive end of the communication link is a first network element and the other is a second network element is used. The technical solutions provided in this application may be applied to AI model performance monitoring or model training in a plurality of scenarios. For example, the first network element obtains the input and/or output of the first module, and monitors and/or trains an AI module deployed on the second network element based on the input and/or output of the first module, or monitors and/or trains an AI module deployed on the first network element; or the first network element monitors and/or trains a dual-ended model deployed on the first network element and the second network element. Optionally, the first module may be deployed on the first network element or the second network element. Alternatively, the first network element may further obtain the input and/or output of the first module deployed on the first network element, and provide the input and/or output for the second network element to monitor and/or train the AI module of the second network element.

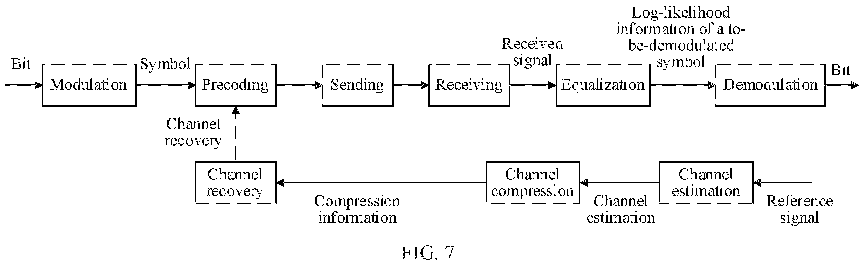

For clarity of solution descriptions, the following provides an example of a communication link with reference to FIG. 7, and describes these technical solutions based on the example.

FIG. 7 is a diagram of a communication link. As shown in FIG. 7, the communication link includes a transmit end and a receive end. The transmit end is an example of a first network element, and the receive end is an example of a second network element. A modulation module, a precoding module, a sending module, and a channel recovery module are deployed on a transmit end side. A receiving module, an equalization module, and a demodulation module are deployed on a receive end side. In addition, a channel estimation module and a channel compression module are further deployed at the receive end. As described above, all or some of the modules deployed on the transmit end side and the receive end side may be AI modules. This is not limited.

The following provides an example 1, an example 2, and an example 3 to describe the technical solutions of this application.

### Example 1

The first network element obtains an input and/or output of a first module to monitor and/or train an AI module of the first network element. Optionally, the first module is deployed on the first network element or the second network element.

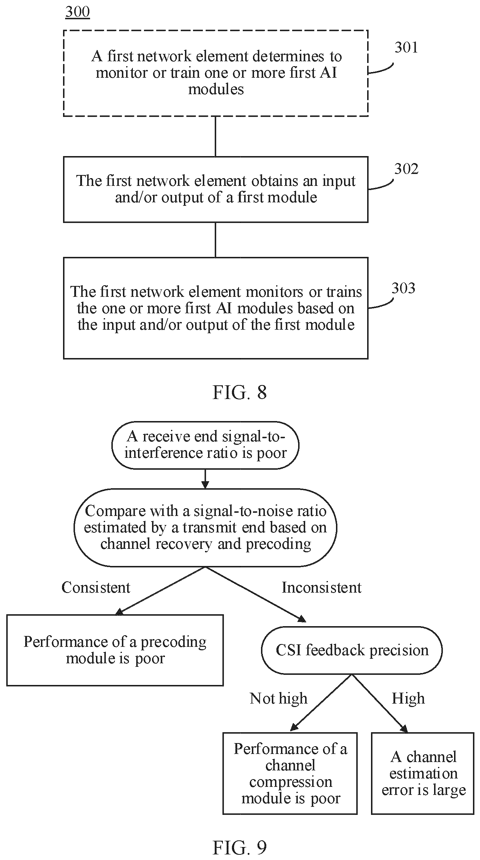

FIG. 8 shows an example of monitoring or training an AI module according to this application.

301: Optionally, a first network element determines to monitor and/or train one or more AI modules.

302: The first network element obtains an input and/or output of a first module.

In a possible case, the first module is deployed on the first network element, and the first network element obtains the input and/or output of the first module.

An input and/or output of the one or more AI modules is determined based on the input and/or output of the first module, or the input and/or output of the first module is determined based on an input and/or output of the one or more AI modules.

In another possible case, the first module is deployed on a second network element, and the first network element may obtain the input and/or output of the first module from the second network element. For example, the first network element indicates the second network element to provide the input and/or output of the first module, and receives the input and/or output of the first module sent by the second network element.

Specifically, the first network element sends first indication information to the second network element, where the first indication information indicates one or more monitoring parameters, and the one or more monitoring parameters include the input and/or output of the first module.

For example, the first indication information may indicate the one or more monitoring parameters in the following manner 1 or manner 2.

### Manner 1

The first indication information indicates an index (for example, referred to as a first index), the first index is one of indexes included in a predefined correspondence, and the correspondence indicates a correspondence between a monitoring parameter and/or a combination of monitoring parameters and an index. The combination of monitoring parameters includes two or more monitoring parameters.

Table 1 is used as an example to describe the correspondence.

**Table 1**

| Index | Monitoring parameter and/or combination of monitoring parameters |
|---|---|
| 0 | Parameter A |
| 1 | Parameter A and parameter B |
| 2 | Parameter B, parameter C, and parameter D |
| 3 | Parameter D |

For example, in the communication link shown in FIG. 7, the first network element is a base station, and the second network element is UE. For performance monitoring of the AI module of the communication link between the base station and the UE, a plurality of indexes may be predefined. For example, for monitoring of the precoding module, an index 0 may be defined, which corresponds to a received signal-to-interference ratio and may be used for coarse monitoring of the precoding module; and an index 1 may be defined, which corresponds to a channel estimation result and a received signal-to-interference ratio and is used for fine monitoring of the precoding module. Further, the base station may deliver a corresponding index to the UE based on a monitoring requirement. Optionally, the base station may further deliver an identifier of a to-be-monitored AI module, for example, an identifier of the precoding module, to indicate that a monitoring parameter corresponding to the index is used to monitor the AI module. This is not limited.

In addition, in an example, an index may further be associated with an ID of a particular AI module, indicating that the index is used to monitor the particular AI module. For example, the index 0 is associated with an ID of the precoding module, indicating that the index 0 is used to monitor the precoding module. For another example, the index 1 is associated with the ID of the precoding module, indicating that the index 1 is used to monitor the precoding module. In another example, an index may not be associated with an ID of a specific AI module. For example, an index 0 is defined, which corresponds to a received signal-to-interference ratio and may be used for coarse monitoring of a precoding module, a channel compression module, or a channel recovery module; an index 1 is defined, which corresponds to a channel estimation result and a received signal-to-interference ratio and is used for fine monitoring of the precoding module, the channel compression module, or the channel recovery module; an index 2 is defined, which corresponds to demodulation accuracy, the channel estimation result, and the received signal-to-interference ratio; and an index 3 is defined, which corresponds to the demodulation accuracy, an input of the demodulation module, the channel estimation result, and the received signal-to-interference ratio.

### Manner 2

The first indication information indicates an identifier of the one or more monitoring parameters, and the identifier of the one or more monitoring parameters is one or more identifiers in identifiers of a group of predefined monitoring parameters. The one or more monitoring parameters include the input and/or output of the first module.

FIG. 7 is used as an example. A predetermined group of monitoring parameters may include inputs and/or outputs of a plurality of modules (AI modules or non-AI modules) of the communication link, for example, one or more of a to-be-modulated bit, a modulation symbol, a received signal-to-interference ratio of the receive end, log-likelihood information of a to-be-demodulated symbol, demodulation information, a channel estimation result, compression information of the channel estimation result, and channel recovery information. Corresponding identifiers are defined for these monitoring parameters. The first indication information indicates, by indicating a corresponding identifier, a monitoring parameter corresponding to the identifier. For example, it is assumed that the foregoing monitoring parameter and the identifier corresponding to the monitoring parameter are: a received signal-to-interference ratio (A) of the receive end, log-likelihood information (B) of a to-be-demodulated symbol, demodulation information (C), a channel estimation result (D), compression information (E), and channel recovery information (F). If the first network element needs to indicate the second network element to feed back the received signal-to-interference ratio, the channel estimation result, and the compression information, the first indication information indicates the identifiers A, D, and E. If the first network element needs the second network element to feed back the received signal-to-interference ratio, the first indication information indicates the identifier A.

Optionally, for the communication link shown in FIG. 7, internal implementation of different modules may be implemented by different vendors (including algorithms optimized by the vendors or AI models). This is not forcibly disclosed. Therefore, module performance may be evaluated based on inputs and/or outputs of different modules or results of processing inputs and/or outputs of different modules. According to the inter-module connection relationship of the communication link shown in FIG. 7, a group of monitoring parameters (or referred to as intermediate variables) that can be used for model monitoring may be determined. The monitoring parameter may include the following types: an input and/or output of a module (implemented by AI or non-AI) of the communication link and a result obtained after an input and/or output of a module of the communication link is processed.

It should be understood that although the monitoring parameter is used to monitor the AI module, the monitoring parameter may include an input and/or output of an AI module, and may further include an input and/or output of a non-AI module. FIG. 7 is used as an example. It is assumed that the channel compression module, the channel recovery module, and the precoding module use an AI model, and other modules such as the channel estimation module and the receiving module use a conventional algorithm. Recovery precision of the channel recovery module and performance of the precoding module are affected by channel estimation. Therefore, the input/output of the channel estimation module can also be used for AI module performance evaluation. In addition, the monitoring parameter may further include a result obtained after an input/output of one or more modules is processed. For example, the received signal-to-interference ratio of the receive end may be estimated by using an output of the receiving module, and may be used for performance evaluation of the precoding module. For another example, a correlation between an output of the channel recovery module and an input of the channel compression module is calculated, and may be used to evaluate channel compression and recovery precision.

Optionally, the foregoing group of monitoring parameters that can be used to monitor the AI module may be predefined, preconfigured, or prestored in a protocol. This is not limited.

When the first network element determines to monitor performance of the one or more AI modules of the communication link, optionally, if a monitoring parameter is generated by the second network element (that is, the monitoring parameter corresponds to an input and/or output of a module, and the module is deployed on the second network element), the first network element may indicate the second network element to feed back the monitoring parameter. Specifically, the foregoing manner 1 or manner 2 may be used, and the monitoring parameter is indicated by the first indication information. For example, the first network element is a base station, and the second network element is UE. For the precoding module, the data label (that is, the optimal precoding matrix) usually cannot be obtained. Therefore, the most direct performance indicator is a receive end signal-to-interference ratio (or a receive end signal to interference plus noise ratio). However, the receive end signal-to-interference ratio is also affected by channel compression on a UE side and channel recovery precision on a base station side. Therefore, the impact of the channel estimation, compression, and recovery modules cannot be excluded only by monitoring the performance of the precoding module based on the receive end signal-to-interference ratio. Based on the foregoing analysis, for monitoring of the precoding module, the base station may indicate the UE to feed back a plurality of monitoring parameters, including a channel estimation result and a received signal-to-interference ratio.

In this embodiment of this application, to effectively evaluate performance of an AI module, a plurality of monitoring parameters that need to be fed back are generated in a same communication process. Therefore, when indicating the second network element to feed back a monitoring parameter, the first network element needs to indicate the communication process. Further, the second network element feeds back the monitoring parameter generated in the communication process.

An example in which the UE side feeds back the channel estimation result and the received signal-to-interference ratio for monitoring of the precoding module is used. One communication process includes: The UE inputs the channel estimation result into the channel compression module to generate compression information. Then, the compression information is fed back to the base station and input into the channel recovery module to obtain channel recovery information for calculation of precoding. The precoding is used for downlink transmission. The receive end may calculate, based on a received signal, the received signal-to-interference ratio when the precoding is used.

Optionally, based on whether generation of a to-be-fed-back monitoring parameter involves interaction between the second network element and the first network element, a specific manner in which the first network element indicates a communication process may be different.

(1) The generation of the to-be-fed-back monitoring parameter does not involve the interaction between the second network element and the first network element.

For example, if the first network element indicates the second network element to feed back the input and/or output of the first module, that is, the monitoring parameter is specifically the input and/or output of the first module, the first network element indicates a specific communication process by using third indication information. Optionally, the third indication information includes one or more of the following:
the third indication information indicates one or more values of an execution time of a third module of the communication link; or
the third indication information indicates one or more identifiers of an input of a third module of the communication link; or
the third indication information indicates one or more identifiers of an output of a third module of the communication link.

The communication link between the base station and the UE shown in FIG. 7 is used as an example. For a plurality of modules (not including interaction with the base station) running on the UE side, the UE only needs to sequentially buffer the plurality of monitoring parameters based on the connection relationship between modules shown in FIG. 7, to ensure that the plurality of monitoring parameters are generated in a same communication process. For example, in FIG. 7, in a process in which the UE sequentially runs the channel estimation module and the channel compression module, a generated channel estimation result and compression information belong to a same communication process. Therefore, the base station only needs to indicate an identifier or time information corresponding to a value of a monitoring parameter, and the UE can determine a value of another monitoring parameter that belongs to a same communication process as the value of the monitoring parameter.

For example, the base station indicates a corresponding moment corresponding to execution of a module (for example, a module A, an example of the third module) or an ID of an output of the module (for example, the module A) in a running process on the UE side, so that the UE can determine a monitoring parameter that belongs to a same communication process as the moment or the ID of the output, for example, the input and/or output of the first module. For example, when the base station indicates the UE to feed back a channel estimation result, used to monitor performance of the channel recovery module. The base station may indicate a feedback moment of compression information corresponding to a monitoring parameter that needs to be fed back by the UE. Further, the UE may determine a channel estimation result that belongs to a same communication process as the feedback moment of the compression information, and feed back the channel estimation result to the base station for performance monitoring of the channel recovery module. When the base station indicates N pieces of moment information, the UE feeds back monitoring parameters respectively corresponding to the N pieces of moment information. For example, if the base station indicates the UE to feed back a channel estimation result, the base station may indicate N feedback moments of the compression information. Further, the UE needs to feed back, to the base station, channel estimation results respectively corresponding to the N feedback moments, that is, feed back N channel estimation results, where the N channel estimation results respectively correspond to the N feedback moments, and N is a positive integer.

Optionally, the first network element may indicate the UE to feed back a plurality of groups of monitoring parameters in one time period. For example, if a plurality of communication processes are involved in the time period, the UE needs to classify a plurality of monitoring parameters generated in each communication process into one group, and further feed back a plurality of groups of monitoring parameters generated in the plurality of communication processes to the first network element.

(2) The generation of the to-be-fed-back monitoring parameter involves the interaction between the second network element and the first network element.

For example, if the first network element indicates the second network element to feed back the input and/or output of the first module, that is, the to-be-fed-back monitoring parameter is the input and/or output of the first module, the first network element indicates a specific communication process by using third indication information. The third indication information may be implemented in the following two manners: (a) and (b).
(a) Optionally, in a specific implementation, the third indication information includes one or more of the following:
   the third indication information indicates a first value of the execution time of the third module of the communication link and a first value of an execution time of a fourth module, where the first value of the execution time of the third module is used to determine a first value of a first monitoring parameter, the first value of the execution time of the fourth module is used to determine a first value of a second monitoring parameter, and the first value of the first monitoring parameter corresponds to the first value of the second monitoring parameter; or
   the third indication information indicates a first identifier of the input or a first identifier of the output of the third module of the communication link and a first identifier of an input or a first identifier of an output of the fourth module, where the first identifier of the input or the first identifier of the output of the third module is used to determine a first value of the first monitoring parameter, the first identifier of the input or the first identifier of the output of the fourth module is used to determine a first value of the second monitoring parameter, and the first value of the first monitoring parameter corresponds to the first value of the second monitoring parameter.

The first value of the execution time of the third module may be understood as a value of an execution time of a module (for example, a module A) of the communication link before the first network element interacts with the second network element. The first value of the execution time of the fourth module may be understood as a value of an execution time of a module (for example, a module B) of the communication link after the first network element interacts with the second network element.

Similarly, the first identifier of the input or the first identifier of the output of the third module may be understood as an identifier of an input or output of a module of the communication link before the first network element interacts with the second network element. The first identifier of the input or the first identifier of the output of the fourth module may be understood as an identifier of an input or output of a module of the communication link after the first network element interacts with the second network element.

If the second network element determines, based on the third indication information, that a value of a monitoring parameter that needs to be fed back is generated before interaction, the value of the monitoring parameter may be determined based on the first value of the execution time of the third module or the first identifier of the input or the first identifier of the output of the third module; or if a value of a monitoring parameter that needs to be fed back is generated after interaction, the value of the monitoring parameter may be determined based on the first value of the execution time of the fourth module or the first identifier of the input or the first identifier of the output of the fourth module.

It should be understood that the first monitoring parameter is an example of the to-be-fed-back monitoring parameter, and the value of the first monitoring parameter is generated before interaction. The second monitoring parameter is an example of the to-be-fed-back monitoring parameter, and the value of the second monitoring parameter is generated after interaction. It should be noted that in this application, the "monitoring parameter" and the "value of the monitoring parameter" are sometimes used interchangeably, and should not constitute any limitation on understanding of the solution. For example, a monitoring parameter A corresponding to a communication process may also be understood as a specific value of the monitoring parameter A in the communication process. Alternatively, it may be understood that after a connection relationship between modules of a communication link is determined, if a monitoring parameter A needs to be fed back, actually, a value corresponding to the monitoring parameter A in a specific communication process needs to be fed back.

In other words, the first value of the execution time of the third module, or the first identifier of the input or the first identifier of the output of the third module, and the first value of the execution time of the fourth module, or the first identifier of the input or the first identifier of the output of the fourth module correspond to a same communication process. The first monitoring parameter (or the value of the first monitoring parameter) generated in the communication process needs to be determined based on related information (specifically, for example, the first value of the execution time of the third module or the first identifier of the input or the first identifier of the output of the third module) of the third module. The second monitoring parameter (or the value of the second monitoring parameter) generated in the communication process needs to be determined based on related information (specifically, for example, the first value of the execution time of the fourth module or the first identifier of the input or the first identifier of the output of the fourth module) of the fourth module.

FIG. 7 is used as an example. The base station indicates the UE to feed back a plurality of monitoring parameters, including the channel estimation result and the received signal-to-interference ratio, used to monitor performance of the precoding module. The base station may indicate a feedback moment t1 of the compression information corresponding to the channel estimation result that needs to be fed back by the UE and a moment t2 at which a precoding matrix obtained based on the fed-back channel information starts to be used for downlink transmission. Further, the UE may determine the channel estimation result that belongs to a same communication process as the feedback moment t1 of the compression information and a received signal-to-interference ratio after the moment t2 at which the precoding matrix starts to be used for downlink transmission, and feed back the channel estimation result and the received signal-to-interference ratio to the base station. When the base station indicates N moment groups {t1, t2}, the UE needs to feed back monitoring parameters respectively corresponding to the N moment groups. In this example, the channel estimation result is an example of the first monitoring parameter, and the received signal-to-interference ratio is an example of the second monitoring parameter. The channel compression module is an example of a module before interaction, and the precoding module is an example of a module after interaction.

(b) Optionally, in another specific implementation, the third indication information indicates the communication process in the following manner.

The third indication information indicates the first value of the execution time of the third module of the communication link and first time information. The first value of the execution time of the third module and the first time information may indicate or be used to determine the first value of the execution time of the fourth module of the communication link. The first value of the execution time of the third module is used to determine a first value of the first monitoring parameter, the first value of the execution time of the fourth module is used to determine a first value of the second monitoring parameter, and the first value of the first monitoring parameter corresponds to the first value of the second monitoring parameter.

Optionally, the first time information indicates a delay or a time difference.

In an example, the first time information indicates a delay. The delay is a delay between the first value of the execution time of the fourth module of the communication link and the first value of the execution time of the third module. In other words, the third indication information indicates a first value of an execution time of a module (which is specifically the third module) before the first network element interacts with the second network element and delay information. The delay information is used to determine a first value of an execution time of a module (which is specifically the fourth module) after the first network element interacts with the second network element.

In another example, the first time information indicates a time difference. The time difference is a time difference between the first value of the execution time of the third module of the communication link and the first value of the execution time of the fourth module. That is, the third indication information indicates a first value of an execution time of a module (which is specifically the third module) after the first network element interacts with the second network element and time difference information. The time difference information is used to determine a first value of an execution time of a module (which is specifically the fourth module) before the first network element interacts with the second network element.

FIG. 7 is still used as an example. For example, the base station indicates the UE to feed back a plurality of monitoring parameters. The plurality of monitoring parameters include the channel estimation result and the received signal-to-interference ratio, used to monitor performance of the precoding module. The base station may indicate a feedback moment t1 of the compression information corresponding to the channel estimation result that needs to be fed back by the UE and a delay T between a moment at which a precoding matrix obtained based on the fed-back channel information starts to be used for downlink transmission and the feedback moment t1 of the compression information. That is, the base station indicates t1 + T to the UE. Further, the UE may determine a channel estimation result that belongs to a same communication process as the feedback moment t1 of the compression information and a received signal-to-interference ratio that is delayed by T compared with the feedback moment t1 of the compression information, and feed back the two monitoring parameters to the base station.

Optionally, the delay T may be a value, indicating that the compression information fed back at the moment t1 and the received signal-to-interference ratio at the moment t1+T belong to a same communication process; or the delay T may be a real number interval [T1, T2], indicating that the compression information fed back at the moment t1 is used to send a signal in a time period [t1+T1, t1+T2]. Therefore, the compression information fed back at the moment t1 and signal receiving in the time period [t1+T1, t1+T2] belong to a same communication process. In this case, the UE needs to feed back a monitoring parameter (for example, the received signal-to-interference ratio) in the time period [t1+T1, t1+T2]. A feedback form may be a full feedback, a feedback of an average value of the monitoring parameter in the time period, or the like. When the base station indicates N pieces of moment information, the UE needs to feed back monitoring parameters respectively corresponding to the N pieces of moment information.

For another example, the base station indicates an execution moment t1 of a module A after interaction or an ID of an input of the module A. In addition, the base station indicates a time difference between an execution moment of a module B before interaction and the execution moment t1 of the module A. Further, the UE may determine a value of a monitoring parameter (for example, the first monitoring parameter) that belongs to a same communication process as the moment t1 or the ID of the input of the module A.

Optionally, the time difference T may be a value, indicating that a module B executed at a moment t1-T and the module A executed at the moment t1 belong to a same communication process; or the time difference T may be a real number interval [T1, T2], indicating that a result of executing a module B in a time period [t1-T1, t1-T2] jointly affects execution of the module A at the moment t1. Therefore, a related monitoring parameter (for example, the first monitoring parameter) generated before interaction in the time period [t1-T1, t1-T2] and a related monitoring parameter (for example, the second monitoring parameter) corresponding to the moment t1 belong to a same communication process. In this case, the UE needs to feed back a related monitoring parameter generated before interaction in a time period [t1-T1, t1-T2], that is, there are a plurality of first monitoring parameters. A feedback form may be a full feedback, a feedback of an average value of the plurality of first monitoring parameters, or the like. This is not limited.

303: The first network element monitors and/or trains one or more AI modules based on the input and/or output of the first module. Optionally, the one or more AI modules are deployed on the first network element or the second network element. Alternatively, the one or more first AI modules include a first sub AI module and a second sub AI module, the first sub AI module is deployed on the first network element, the second sub AI module is deployed on the second network element, and the first sub AI module and the second sub AI module are used in a matching manner. It should be understood that the first sub AI module and the second sub AI module herein are two sub-models in a dual-ended model. An auto encoder (auto encoder, AE) model may generally refer to a network structure including two sub-models. The AE model may also be referred to as a bilateral model, a dual-ended model, or a collaborative model. An encoder and a decoder of the AE are usually trained together and may be used in a matching manner. For example, an AI-based CSI feedback is a dual-ended model. For example, a UE side compresses and quantizes CSI by using the encoder, and an access network device restores the CSI by using the decoder. For the access network device, an input of the AI model is the CSI fed back by the UE side, and an output is the restored CSI. However, for model training, the CSI measured by the UE side needs to be used as a truth value label of the restored CSI.

Specifically, the first network element analyzes performance of an AI module in a corresponding communication process based on the input and/or output of the first module. If the performance of the AI module is lower than a threshold in one or more communication processes, it may be determined that the performance of the monitored AI module does not meet a requirement, and model update or switching needs to be performed. If the AI module is located on the second network element, the first network element may indicate, by using indication information, the second network element to update or switch the AI module. In addition, if the first network element finds, in a performance analysis process, that a performance risk exists in a remaining related AI module associated with the fed-back monitoring parameter, the first network element can also send indication information to trigger performance monitoring of the related AI module, or deliver indication information to notify the second network element that a performance risk exists in the related AI module.

FIG. 9 is a diagram of analyzing performance of an AI module by a first network element. Performance monitoring of a precoding module is used as an example. It is assumed that the first network element is a base station and a second network element is UE. The base station may analyze performance of the precoding module by using the following method: When a monitoring parameter fed back by the UE shows that a receive end signal-to-interference ratio is poor (where the receive end signal-to-interference ratio may be determined based on a precoding matrix obtained by using real channel information and the precoding module), the base station may further obtain, based on channel recovery information obtained by a channel recovery module and the precoding matrix obtained by the precoding module, a receive end signal-to-interference ratio expected on a base station side. If the fed-back receive end signal-to-interference ratio is basically consistent with the receive end signal-to-interference ratio expected by the base station, it is considered that the performance of the precoding module is relatively poor, and no proper precoding matrix has been obtained to effectively suppress interference. If the fed-back receive end signal-to-interference ratio is not consistent with the receive end signal-to-interference ratio expected by the base station, it is considered that the channel recovery information obtained by the channel recovery module differs greatly from the real channel information. Consequently, the precoding module has not obtained a proper precoding matrix to effectively suppress interference. Therefore, the base station may further compare a fed-back channel estimation result and the channel recovery information that is obtained by the channel recovery module. If a similarity between the fed-back channel estimation result and the channel recovery information is high, it is considered that the channel estimation result on a UE side differs greatly from the real channel information, that is, performance of the channel estimation module on the UE side is relatively poor. On the contrary, if a similarity between the fed-back channel estimation result and the channel recovery information that is obtained by the channel recovery module is low, it is considered that performance of a channel compression module and the channel recovery module is relatively poor.

Optionally, the first network element can also analyze performance of a plurality of AI modules in a corresponding communication process based on an input and/or output of a first module. If the plurality of monitored AI modules include an AI module that does not meet a requirement, the AI module that does not meet the requirement may be updated or switched. For example, if performance of an AI module is lower than a threshold in one or more communication processes, it may be determined that the performance of the AI module does not meet the requirement, and model update or switching needs to be performed. If the model is deployed on the second network element, the first network element may send indication information to indicate the second network element to switch or update the AI module, or prompt the second network element that the AI module has a performance risk.

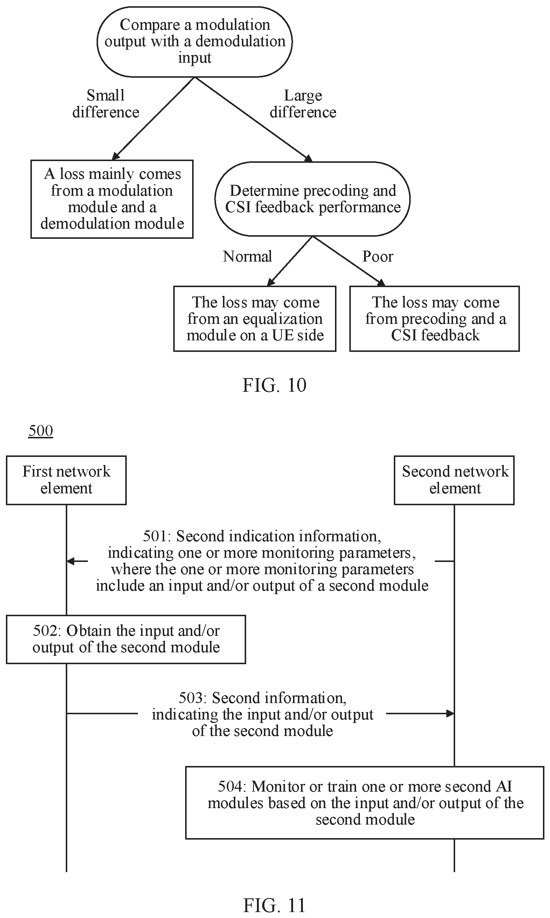

FIG. 10 is another diagram of analyzing performance of an AI module by a first network element. An example in which a base station indicates UE to feed back demodulation accuracy, an input of a demodulation module, a channel estimation result, and a received signal-to-interference ratio is used. The base station may analyze the performance of the AI model by using the following method: When a monitoring parameter fed back by the UE indicates that demodulation accuracy is poor, the base station may further compare the input of the demodulation module at a receive end and an output of a modulation module on a base station side. When a difference between the input of the demodulation module at the receive end and the output of the modulation module on the base station side is small, it is considered that performance of the modulation and demodulation modules is relatively poor, and modulation and demodulation effects are not good. If a difference between the input of the demodulation module at the receive end and the output of the modulation module on the base station side is large, it is considered that the demodulation accuracy is poor due to poor performance of an intermediate process of the modulation and demodulation modules. Therefore, the base station may further analyze performance of a precoding module, a channel estimation module, a compression module, and a feedback module based on the channel estimation result and the received signal-to-interference ratio. If the performance of these AI modules is normal, it is considered that performance of an equalization module on a UE side is relatively poor. On the contrary, if a similarity between the fed-back channel estimation result and channel recovery information that is obtained by a channel recovery module is low, it is considered that the performance of the channel compression module and the channel recovery module is relatively poor.

In this example, the second network element feeds back a monitoring parameter once, which may be used for performance monitoring of a plurality of AI modules, so that feedback overheads of the performance monitoring of the AI modules can be reduced.

With reference to FIG. 9 and FIG. 10, the foregoing describes an example of application of the technical solution provided in this application to AI model performance monitoring. The following describes an example of performing AI model training based on a monitoring parameter.

The connection relationship of the modules of the communication link shown in FIG. 7 is used as an example for description. In addition, an example in which the first network element is a base station, the second network element is UE, and the base station performs model training is used for description.

Training of the precoding module is used as an example. Training data includes an input and a label. The input of the precoding module is the channel recovery information output by the channel recovery module on the base station side, and the label output by the precoding module includes the channel estimation result fed back by the UE. The channel recovery information is associated with the channel estimation result. A training process is as follows: The channel recovery information is input to the precoding module, the precoding result is output, and the signal-to-interference ratio is calculated based on the precoding result and the channel estimation result. If the signal-to-interference ratio is lower than the threshold, a weight of the precoding module is updated to increase the signal-to-interference ratio until the signal-to-interference ratio meets the requirement.

Further, an example in which the precoding module and the channel recovery module are jointly trained is used as an example. Training data includes an input and a label. The channel recovery module and the precoding module are considered as a whole. The input of the model is channel compression information fed back by the channel compression module on the UE side. The label of the model includes a channel estimation result fed back by the UE. The channel compression information is associated with the channel estimation result. A training process is as follows: The channel compression information is input to the channel recovery module to obtain the channel recovery information, and then the channel recovery information is input to the precoding module to output a precoding result. The signal-to-interference ratio is calculated based on the precoding result and the channel estimation result, and a difference between the channel recovery information and the channel estimation result is multiplied by -1, which is denoted as E (a negative number, where a larger value indicates higher recovery precision). If a weighted sum of the signal-to-interference ratio and E is less than a threshold, a weight of the precoding module and a weight of the channel recovery module are updated to increase the weighted sum of the signal-to-interference ratio and E until the weighted sum of the signal-to-interference ratio and E meets a requirement.

With reference to FIG. 10, in the performance analysis shown in FIG. 10, if it is determined, based on an analysis result, that performance of the modulation module and the demodulation module is relatively poor and the AI model needs to be updated, the following steps may be performed.

Training of the modulation module and the demodulation module is used as an example. The training data includes an input and a label. The input of the modulation module is a to-be-modulated symbol on the base station side (including a to-be-modulated symbol associated with a feedback of the UE on the base station side), and the label is the same as the input. The base station inputs the to-be-modulated symbol to the modulation module, and then adds random noise to the output of the modulation module for input to the demodulation module designed by the base station side, to obtain a restored symbol. The base station calculates a difference between the restored symbol and the input symbol. If the difference is greater than a threshold, the weights of the modulation module and the demodulation module are updated to reduce the difference until the difference is less than the threshold. After the modulation module is trained or updated, the input in the training data and the output of the corresponding modulation module are delivered to the UE, so that the UE updates or trains the modulation module of the UE.

If it is determined, based on the analysis result, that the channel compression module or the precoding module has relatively poor performance and needs to be updated, refer to the foregoing example description of training of the channel compression module or the precoding module.

### Example 2

The first network element obtains an input and/or output of a module deployed on the first network element, and provides the input and/or output for the second network element to monitor and/or train the AI module of the second network element.

FIG. 11 shows another example of monitoring or training an AI module according to this application.

501: A first network element receives second indication information from a second network element, where the second indication information indicates one or more monitoring parameters, and the one or more monitoring parameters include an input and/or output of a second module.

The second module may be any module of a communication link, and the second module may be a non-AI module or an AI module. This is not limited.

502: The first network element obtains the input and/or output of the second module.

503: The first network element sends second information to the second network element, where the second information indicates the input and/or output of the second module.

The input and/or output of the second module is used to monitor or train one or more AI modules. The one or more AI modules are deployed on the second network element. For clarity of description, the one or more AI modules are all referred to as a second AI module. An input and/or output of the one or more second AI modules is determined based on the input and/or output of the second module, or the input and/or output of the second module is determined based on an input and/or output of the one or more second AI modules.

504: The second network element monitors and/or trains the one or more second AI modules based on the input and/or output of the second module.

In this example, the first network element obtains one or more monitoring parameters (which, for example, may include the input and/or output of the second module) based on an indication of the second network element and provides the one or more monitoring parameters for the second network element. The one or more monitoring parameters are used by the second network element to monitor and/or train the one or more AI modules of the second network element.

For specific implementation of indicating, by the second network element to the first network element by using second indication information, the monitoring parameter that needs to be fed back, and feeding back, by the first network element, the monitoring parameter to the second network element by using the second information, refer to the descriptions or the example in Example 1. Details are not described again.

### Example 3

An example in which the first network element is a base station and the second network element is UE is used. The base station indicates the UE to provide one or more monitoring parameters, which are used to monitor or train performance of one or more AI models of an uplink communication link.

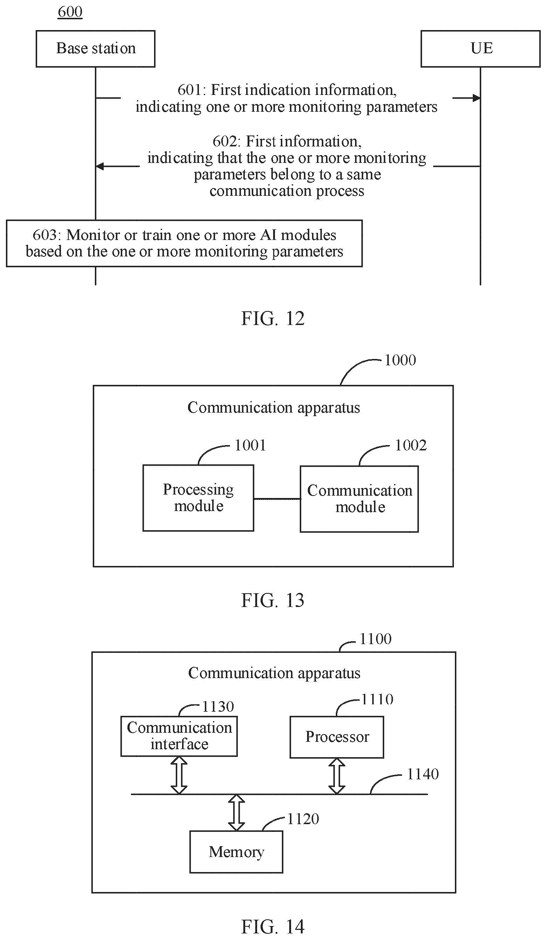

FIG. 12 shows another example of monitoring or training an AI module according to this application.

601: A base station sends first indication information to UE, where the first indication information indicates one or more monitoring parameters.

The one or more monitoring parameters include an input and/or output of one or more modules of a communication link.

For specific implementation of indicating the one or more monitoring parameters by the first indication information, refer to the descriptions or the example in Example 1.

For example, the first indication information may indicate one of a plurality of predefined feedback options. For example, in a feedback option 1, a channel recovery result is fed back, and is used for coarse monitoring of a channel compression module and a channel recovery module; or in a feedback option 2, a channel recovery result and a modulation symbol are fed back, and are used for performance monitoring of a precoding module, a channel compression module, a channel recovery module, and an equalization module.

For example, a monitoring parameter that the base station indicates the UE to feed back includes the channel recovery result and the modulation symbol. The base station may indicate the UE to feed back a modulation symbol in a specific data frame. Further, the UE may determine a channel recovery result that belongs to a same communication process as the to-be-fed-back modulation symbol, and feed back the channel recovery result to the base station for AI model performance monitoring. When the base station indicates N pieces of moment information, the UE needs to feed back monitoring parameters respectively corresponding to the N pieces of moment information.

602: The base station receives first information from the UE, where the first information indicates a value of the one or more monitoring parameters.

As described above, when there are a plurality of monitoring parameters, a plurality of monitoring parameters belonging to a same communication process are classified into one group. In addition, when there are a plurality of communication processes, the first information indicates values of a plurality of groups of monitoring parameters, and values of each group of monitoring parameters correspond to one communication process.

603: The base station monitors or trains one or more AI modules of an uplink communication link based on the value of the one or more monitoring parameters.

Optionally, if an AI module whose performance does not meet a requirement exists in monitored AI modules, the AI model may be switched or updated. If the AI model that does not meet the requirement is deployed on a UE side, the base station may deliver indication information to indicate the UE to update or switch the AI model, or deliver indication information to notify the UE of the AI model that has a performance risk.

An example in which the base station indicates the UE to feed back the feedback option 2 in step 601 is used. The base station may analyze the AI model performance by using the following method: When demodulation accuracy of a frame on a base station side is poor, the base station may further analyze received signal strength. When the received signal strength differs greatly from the expected received signal strength calculated by the base station side based on an estimated uplink channel, precoding performance on the UE side is poor. Otherwise, when the received signal strength does not differ greatly from the expected received signal strength calculated by the base station side based on an estimated uplink channel, it is considered that performance of the equalization module on the base station side is poor. If the precoding performance on the UE side is relatively poor, the channel recovery result fed back by the UE is further compared with the channel estimated by the base station side based on the uplink reference signal. If the channel recovery result on the UE side differs greatly from the uplink channel estimated by the base station side, but is close to a historical uplink channel, it is considered that a channel compression feedback delay is relatively large. If the channel recovery result on the UE side differs greatly from the uplink channel estimated by the base station side, and is not close to the historical uplink channel, it is considered that performance of channel compression and recovery modules is relatively poor. If the channel recovery result on the UE side is close to the uplink channel estimated by the base station side, it is considered that the performance of the precoding module on the UE side is relatively poor.

In this example, the base station indicates the UE to feed back a plurality of monitoring parameters that belong to a same uplink communication process, and simultaneously monitors performance of a plurality of AI models, where each monitoring parameter may be affected by performance of the plurality of AI models. Although each monitoring parameter is fed back only once, the monitoring parameter may be used to monitor performance of a plurality of AI models, so that feedback overheads of AI model performance monitoring can be reduced.

Example 1 to Example 3 above separately describe application of the technical solutions of this application in different cases. It may be understood that these examples may alternatively be combined with each other. For example, if Example 1 is combined with Example 2, the first network element obtains the input and/or output of the first module, and monitors or trains one or more first AI modules. In addition, the first network element may further provide the input and/or output of the second module for the second network element based on an indication of the second network element, so that the second network element monitors or trains one or more second AI modules. If Example 2 is combined with Example 3, the first network element provides, based on an indication of the second network element, the input and/or output of the second module for the second network element, so that the second network element monitors or trains one or more second AI modules. In addition, the first network element indicates the second network element to feed back an input and/or output of one or more modules of the communication link, so that the first network element monitors or trains one or more AI modules of the uplink communication link.

Based on the technical solutions provided in this application and the foregoing examples, a person skilled in the art may further figure out use of the technical solution in another application scenario, for example, monitoring performance of or training one or more AI modules of a downlink communication link based on an input/output (that is, one or more monitoring parameters) of one or more modules of the communication link. Details are not listed one by one in embodiments of this application.

The foregoing describes in detail method embodiments of monitoring or training an AI model that are provided in this application. The following describes a communication apparatus provided in this application.

Refer to FIG. 13. This application provides a communication apparatus 1000.

As shown in FIG. 13, the communication apparatus 1000 includes a processing module 1001 and a communication module 1002. The communication apparatus 1000 may be a terminal device, or may be a communication apparatus, for example, a chip, a chip system, or a circuit, that is used in the terminal device or that is used with the terminal device in a matching manner and that can implement a method performed on a terminal device side. Alternatively, the communication apparatus 1000 may be a network device, or may be a communication apparatus, for example, a chip, a chip system, or a circuit, that is used in the network device or that is used with the network device in a matching manner and that can implement a method performed on a network device side. For example, the network device may be the access network device in the method embodiments of this application.

The communication module may also be referred to as a transceiver module, a transceiver, a transceiver device, a transceiver apparatus, or the like. The processing module may also be referred to as a processor, a processing board, a processing unit, a processing apparatus, or the like. Optionally, the communication module is configured to perform a sending operation and a receiving operation on the terminal device side or the network device side in the foregoing methods. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 1000 is used in the terminal device, the processing module 1001 may be configured to implement a processing function of the terminal device in the embodiments in FIG. 3 to FIG. 12, and the communication module 1002 may be configured to implement receiving and sending functions of the terminal device in the embodiments in FIG. 3 to FIG. 12.

When the communication apparatus 1000 is used in the network device, the processing module 1001 may be configured to implement a processing function of the network device (for example, the positioning device or the access network device) in the embodiments in FIG. 3 to FIG. 12, and the communication module 1002 may be configured to implement receiving and sending functions of the network device in the embodiments in FIG. 3 to FIG. 12.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using an entity apparatus. For example, if the apparatus is implemented by using a chip/chip circuit, the communication module may be an input/output circuit and/or a communication interface, and performs an input operation (corresponding to the foregoing receiving operation) and an output operation (corresponding to the foregoing sending operation). The processing module is an integrated processor, a microprocessor, or an integrated circuit.

Division into the modules in this application is an example, is merely division into logical functions, and may be other division during actual implementation. In addition, functional modules in examples of this application may be integrated into one processor, each of the modules may exist alone physically, or two or more modules may be integrated into one module. The integrated module may be implemented in a form of hardware, or may be implemented in a form of a software functional module.

Refer to FIG. 14. This application further provides a communication apparatus 1100. Optionally, the communication apparatus 1100 may be a chip or a chip system. Optionally, in this application, the chip system may include a chip, or may include a chip and another discrete component.

The communication apparatus 1100 may be configured to implement a function of any network element (for example, the terminal device, the network device, or the AI entity) in the communication system described in the foregoing examples. The communication apparatus 1100 may include at least one processor 1110. Optionally, the processor 1110 is coupled to a memory. The memory may be located in the apparatus. Alternatively, the memory may be integrated with the processor. Alternatively, the memory may be located outside the apparatus. For example, the communication apparatus 1100 may further include at least one memory 1120. The memory 1120 stores a computer program, a computer program or instructions, and/or data necessary for implementing any one of the foregoing examples. The processor 1110 may execute the computer program stored in the memory 1120 to complete the method in any one of the foregoing examples.

The communication apparatus 1100 may further include a communication interface 1130, and the communication apparatus 1100 may exchange information with another device through the communication interface 1130. For example, the communication interface 1130 may be a transceiver, a circuit, a bus, a module, a pin, or a communication interface of another type. When the communication apparatus 1100 is a chip-type apparatus or circuit, the communication interface 1130 in the apparatus 1100 may alternatively be an input/output circuit, and may input information (or referred to as receiving information) and output information (or referred to as sending information). The processor is an integrated processor, a microprocessor, an integrated circuit, or a logic circuit. The processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 1110 may operate cooperatively with the memory 1120 and the communication interface 1130. A specific connection medium between the processor 1110, the memory 1120, and the communication interface 1130 is not limited in this application.

Optionally, as shown in FIG. 13, the processor 1110, the memory 1120, and the communication interface 1130 are connected to each other by using a bus 1140. The bus 1140 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line represents the bus in FIG. 13, but this does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general-purpose processor may be a microprocessor, any conventional processor, or the like. The steps of the methods disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of instructions or a data structure and that can be accessed by a computer, but is not limited thereto. The memory in this application may alternatively be a circuit or any other apparatus that can implement a storage function, and is configured to store program instructions and/or data.

In a possible implementation, the communication apparatus 1100 may be used on a network device side, for example, the access network device in embodiments of this application, or a host or a cloud device in an over the top (over the top, OTT) system. Specifically, the communication apparatus 1100 may be a network device, or may be an apparatus that can support the network device in implementing a corresponding function on a network device side in any one of the foregoing examples. The memory 1120 stores a computer program (or instructions) and/or data for implementing the functions on the network device side in any one of the foregoing examples. The processor 1110 may execute the computer program stored in the memory 1120 to complete the method performed by the network device side in any one of the foregoing examples. The communication interface in the communication apparatus 1100 may be configured to: interact with the terminal device, and send information to the terminal device or receive information from the terminal device.

In another possible implementation, the communication apparatus 1100 may be used in a terminal device. Specifically, the communication apparatus 1100 may be a terminal device, or may be an apparatus that can support the terminal device in implementing a function of the terminal device in any one of the foregoing examples. The memory 1120 stores a computer program (or instructions) and/or data for implementing the functions of the terminal device in any one of the foregoing examples. The processor 1110 may execute the computer program stored in the memory 1120 to complete the method performed by the terminal device in any one of the foregoing examples. The communication interface in the communication apparatus 1100 may be configured to: interact with the network device side (for example, the access network device), and send information to the network device side or receive information from the network device side.

The communication apparatus 1100 provided in this example may be used on the network device side (for example, the access network device) to complete the method performed by the network device side, or may be used in the terminal device to complete the method performed by the terminal device. Therefore, for technical effects that can be achieved by this embodiment, refer to the foregoing method embodiments. Details are not described herein again.

Based on the foregoing example, this application provides a communication system. In an example, the communication system includes a first network element and a second network element. For example, the first network element is an access network device, and the second network element is a terminal. For example, both the first network element and the second network element are network devices, or both the first network element and the second network element are terminal devices. The communication system may implement the AI model monitoring or training method provided in the embodiments shown in FIG. 3 to FIG. 10.

All or some of the technical solutions provided in this application may be implemented by using software, hardware, firmware, or any combination thereof. When implemented by software, all or some of the technical solutions may be implemented in a form of a computer program product. The computer program product includes one or more computer instructions. When the computer program instructions are loaded and executed on a computer, some or all the procedures or functions described in this application are generated. The computer may be a general-purpose computer, a dedicated computer, a computer network, a terminal device, an access network device, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, wireless, or microwave) manner. The computer-readable storage medium may be any usable medium accessible by a computer, or a data storage device such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this application, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

At least one (item) in embodiments of this application indicates one or more (items). "A plurality of (items) "indicate two (items) or more than two (items). The term "and/or" describes an association relationship between associated objects and indicates that three relationships may exist. For example, A and/or B may indicate the following three cases: Only A exists, both A and B exist, and only B exists. The character "/" generally indicates an "or" relationship between associated objects. In addition, it should be understood that although terms such as first and second may be used in this disclosure to describe objects, these objects are not limited by these terms. These terms are merely used to distinguish between the objects.

The term "include" and any other variant thereof mentioned in embodiments of this application are intended to cover a non-exclusive inclusion. For example, a process, a method, a system, a product, or a device that includes a series of steps or units is not limited to the listed steps or units, but optionally further includes another unlisted step or unit, or optionally further includes another inherent step or unit of the process, the method, the product, or the device. It should be noted that in this application, the word such as "example" or "for example" represents giving an example, an illustration, or a description. Any method or design solution described in this application as "example" or "for example" should not be explained as being more preferred or advantageous over another method or design solution. To be precise, use of the word such as "example" or "for example" is intended to present a relative concept in a specific manner.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (random access memory, RAM), a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An artificial intelligence AI model monitoring or training method, applied to a first network element or a chip of the first network element, wherein the method comprises:
obtaining an input and/or output of a first module, wherein the first module is an AI module or a non-AI module of a communication link; and
monitoring and/or training one or more first AI modules of the communication link based on the input and/or output of the first module, wherein
an input and/or output of the one or more first AI modules is determined based on the input and/or output of the first module, or the input and/or output of the first module is determined based on an input and/or output of the one or more first AI modules.

2. The method according to claim 1, wherein that the input and/or output of the one or more first AI modules is determined based on the input and/or output of the first module, or the input and/or output of the first module is determined based on the input and/or output of the one or more first AI modules comprises:
an identifier of the corresponding input and/or output of the one or more first AI modules corresponds to an identifier of the input and/or output of the first module; or
a value of a corresponding execution time of the one or more first AI modules corresponds to a value of an execution time of the first module.

3. The method according to claim 1 or 2, wherein the first module is deployed on the first network element or a second network element, and the one or more first AI modules are deployed on the first network element; or
the first module is deployed on the first network element or the second network element, and the one or more first AI modules are deployed on the second network element; or
the first module is deployed on the first network element or the second network element, the one or more first AI modules comprise a first sub AI module and a second sub AI module, the first sub AI module is deployed on the first network element, the second sub AI module is deployed on the second network element, and the first sub AI module and the second sub AI module are used in a matching manner.

4. The method according to any one of claims 1 to 3, wherein the first module is deployed on the second network element; and
obtaining the input and/or output of the first module comprises:
receiving first information from the second network element, wherein the first information indicates the input and/or output of the first module.

5. The method according to claim 4, wherein before receiving the first information from the second network element, the method further comprises:
sending first indication information to the second network element, wherein the first indication information indicates one or more monitoring parameters, and the one or more monitoring parameters comprise the input and/or output of the first module.

6. The method according to any one of claims 1 to 5, further comprising:
obtaining an input and/or output of a second module, wherein the second module is an AI module or a non-AI module of the communication link; and
sending second information to the second network element, wherein the second information indicates the input and/or output of the second module, the input and/or output of the second module is determined based on an input and/or output of a second AI module of the communication link, or an input and/or output of a second AI module of the communication link is determined based on the input and/or output of the second module.

7. The method according to claim 6, wherein before sending the second information to the second network element, the method further comprises:
receiving second indication information from the second network element, wherein the second indication information indicates one or more monitoring parameters, and the one or more monitoring parameters comprise the input and/or output of the second module.

8. The method according to any one of claims 5 to 7, wherein that the first indication information indicates the one or more monitoring parameters comprises:
the first indication information indicates a first index, the first index is one of indexes comprised in a predefined correspondence, the correspondence indicates a correspondence between a monitoring parameter and/or a combination of monitoring parameters and an index, and the combination of monitoring parameters comprises two or more monitoring parameters; or
the first indication information indicates an identifier of the one or more monitoring parameters, and the identifier of the one or more monitoring parameters is one or more identifiers in identifiers of a group of predefined monitoring parameters.

9. The method according to claim 8, wherein the first indication information further comprises an identifier of the one or more first AI modules, and the one or more monitoring parameters indicated by the first indication information are used to monitor the one or more first AI modules.

10. The method according to any one of claims 5 to 7, further comprising:
sending third indication information to the second network element, wherein
the third indication information indicates one of the following information:
one or more values of an execution time of a third module of the communication link, wherein the value of the execution time of the third module corresponds to the value of the execution time of the first module; or
one or more identifiers of an input of the third module of the communication link, wherein the identifier of the input of the third module corresponds to the identifier of the input and/or output of the first module; or
one or more identifiers of an output of the third module of the communication link, wherein the identifier of the output of the third module corresponds to the identifier of the input and/or output of the first module.

11. The method according to claim 10, wherein that the first indication information indicates the one or more monitoring parameters comprises:
the first indication information indicates a plurality of monitoring parameters, and the plurality of monitoring parameters comprise a first monitoring parameter and a second monitoring parameter; and
the third indication information indicates a first value of the execution time of the third module of the communication link and a first value of an execution time of a fourth module of the communication link, wherein
the first value of the execution time of the third module is used to determine a first value of the first monitoring parameter, the first value of the execution time of the fourth module is used to determine a first value of the second monitoring parameter, and the first value of the first monitoring parameter corresponds to the first value of the second monitoring parameter; or
the third indication information indicates a first identifier of the input or a first identifier of the output of the third module of the communication link and a first identifier of an input or a first identifier of an output of the fourth module of the communication link, wherein
the first identifier of the input or the first identifier of the output of the third module is used to determine a first value of the first monitoring parameter, the first identifier of the input or the first identifier of the output of the fourth module is used to determine a first value of the second monitoring parameter, and the first value of the first monitoring parameter corresponds to the first value of the second monitoring parameter.

12. The method according to claim 10, wherein that the first indication information indicates the one or more monitoring parameters comprises:
the first indication information indicates a plurality of monitoring parameters, and the plurality of monitoring parameters comprise a first monitoring parameter and a second monitoring parameter; and
the third indication information indicates a first value of the execution time of the third module of the communication link and first time information, and the first value of the execution time of the third module and the first time information indicate a first value of an execution time of a fourth module of the communication link, wherein
the first value of the execution time of the third module is used to determine a first value of the first monitoring parameter, the first value of the execution time of the fourth module is used to determine a first value of the second monitoring parameter, and the first value of the first monitoring parameter corresponds to the first value of the second monitoring parameter.

13. The method according to claim 12, wherein the first time information indicates a delay, and the delay is a delay between the first value of the execution time of the fourth module and the first value of the execution time of the third module; or
the first time information indicates a time difference, and the time difference is a time difference between the first value of the execution time of the third module and the first value of the execution time of the fourth module.

14. The method according to claim 12 or 13, wherein the first time information indicates a moment T, and T is a real number; or
the first time information indicates a time interval [T1, T2], and T1 and T2 are both real numbers.

15. The method according to claim 14, wherein when the first time information indicates the time interval [T1, T2], the second monitoring parameter has a plurality of first values, and the first value of the first monitoring parameter corresponds to the plurality of first values of the second monitoring parameter.

16. A communication apparatus, comprising a module configured to implement the method according to any one of claims 1 to 15.

17. A communication apparatus, comprising:
a processor, wherein the processor is coupled to a memory, and the processor is configured to invoke computer program instructions stored in the memory to perform the method according to any one of claims 1 to 15.

18. A communication apparatus, comprising: a processor and a communication interface, wherein the communication interface is configured to: receive data and/or information, and transmit the received data and/or information to the processor, and the processor processes the data and/or information; and the communication interface is further configured to output the data and/or information processed by the processor, so that the communication apparatus performs the method according to any one of claims 1 to 15.

19. A computer-readable storage medium, wherein the computer-readable storage medium stores instructions; and when the instructions are run on a computer, the computer is enabled to perform the method according to any one of claims 1 to 15.

20. A computer program product, wherein the computer-readable storage medium stores instructions; and when the instructions are run on a computer, the computer is enabled to perform the method according to any one of claims 1 to 15.

21. A communication system, comprising the communication apparatus according to claim 16 or 17.
